# FASCICULE DE BREVET EUROPEEN

(11) **EP 2 522 895 B1**
(45) Date de publication et mention de la délivrance du brevet: **10.06.2015**
(21) Numéro de dépôt: 12167420.4
(22) Date de dépôt: 10.05.2012
(51) Int. Cl.: B64G 1/24, F16L 41/06, B64G 1/40, F16K 24/00, F17C 13/00, F42B 3/00, F42B 12/04, F16K 17/40, F16K 17/38

(54) **Dispositif de purge d'un réservoir d'un système spatial**
Vorrichtung zur Entleerung eines Tanks eines Raumfahrtsystems
Device for bleeding a tank of a space system

(30) Priorité: 13.05.2011 FR 1101461
(43) Date de publication de la demande: 14.11.2012
(73) Titulaire: Centre National d'Etudes Spatiales (C.N.E.S.), 75001 Paris (FR)
(72) Inventeur: Dilhan, Denis, 31190 Auterive (FR)
(74) Mandataire: Cabinet BARRE LAFORGUE & associés

(56) Documents cités:
- FR-A1- 2 077 835
- JP-A- 2007 170 544
- US-A- 3 709 250

## Description

L'invention concerne un dispositif de purge d'un réservoir d'un système spatial.

Dans le domaine des véhicules spatiaux, en particulier pour les véhicules spatiaux non réutilisables tels que les satellites artificiels de communication ou d'observation par exemple, lorsque le satellite arrive en fin de vie opérationnelle, il est impératif de libérer l'orbite utilisée et de désactiver le satellite en fin de vie.

Dans la suite du texte, on utilise le terme de satellite (sans autre précision) pour désigner plus généralement un véhicule spatial quelconque susceptible de parvenir en fin de vie opérationnelle de manière prévisible ou non, le cas échéant à la suite d'un incident ou d'une panne.

On connaît plusieurs procédés pour éliminer un satellite en fin de vie dont, par exemple, la destruction du satellite par combustion et/ou fusion lors de la rentrée de celui-ci dans l'atmosphère terrestre (en général pour les satellites circulant en orbite basse) ou la mise du satellite sur une orbite « cimetière » pour des satellites placés sur une orbite de plus haute altitude, comme l'orbite géostationnaire, à 35 786 km de la Terre. Lorsqu'un satellite, et plus particulièrement un satellite géostationnaire, est parvenu en fin de vie opérationnelle, on utilise le carburant restant dans les réservoirs du satellite pour le propulser vers une orbite dite « de rebut » ou « cimetière » située au-delà de l'orbite géostationnaire. Une fois sur cette orbite, le satellite est désactivé, et en particulier ses réservoirs de fluide, tant de fluides propulseurs (ergols) que de fluides de pressurisation (hélium, azote, etc.) doivent être purgés afin d'éviter tout risque d'explosion en cas de rencontre avec un débris spatial. De même, pour un satellite en orbite basse, une fois que l'accélération de désorbitation a été appliquée, il convient de purger ses réservoirs afin d'éviter tout risque d'explosion génératrice de débris spatiaux susceptible d'être causée par les ergols restants lors de la combustion du satellite à la rentrée dans l'atmosphère.

Plusieurs moyens sont employés pour réaliser cette purge. Par exemple, il est possible d'ouvrir les vannes d'alimentation des moteurs pour laisser s'échapper le reliquat d'ergols restants une fois l'orbite cimetière atteinte ou l'accélération de désorbitation appliquée. Cependant cette solution n'est pas satisfaisante dans le cas de réservoirs à membrane dont la «poche de pressurisation » ne peut être purgée ainsi, non plus que dans le cas de réservoirs de pressurisation qui sont isolés des réservoirs d'ergols après leur mise en pression.

Il est également possible d'utiliser des vannes pyrotechniques, comme celles connues du document FR 2 561 743, placées par exemple sur une dérivation de purge de la (ou des) canalisation(s) aboutissant au réservoir, la vanne pyrotechnique ayant pour fonction d'ouvrir la canalisation de purge. Cependant, outre les problèmes posés par la fiabilité de ces vannes pyrotechniques, dont la durée de vie n'excède pas 8 à 10 ans alors que la purge est effectuée de 15 à 20 ans, voire plus, après la mise en service du satellite, la réalisation de canalisations de purge et le montage de vannes pyrotechniques adaptées est couteuse, en masse comme en complexité. De plus, ces canalisations et ces vannes doivent être prévues spécifiquement pour chaque satellite dès le départ de la conception et entrainent des difficultés supplémentaires lorsqu'une modification est nécessaire dans l'implantation du réservoir ou de ses canalisations.

Un dispositif correspondant au préambule de la revendication 1 est connu du document FR-A-2077835. Le document JP-A-2007170544 divulgue un dispositif pyrotechnique muni d'une enclume, ce dispositif écorche tangentiellement la canalisation.

L'invention a donc pour but de fournir un dispositif de purge pour un réservoir de fluide sous pression qui ne présente pas les inconvénients de la technique antérieure connue.

L'invention vise également à fournir un tel dispositif de purge qui soit adaptable simplement sur de multiples plateformes, à différents types de satellites et de réservoirs.

L'invention vise en outre à fournir un tel dispositif dont la durée de vie, la sécurité et la fiabilité sont améliorées par rapport aux dispositifs connus.

L'invention vise de plus à fournir un tel dispositif qui respecte les nouvelles règles en matière de limitation de génération de débris spatiaux.

L'invention vise aussi à fournir un tel dispositif dont le coût unitaire peut être fortement réduit par rapport aux dispositifs connus.

Pour ce faire, l'invention propose un dispositif de purge d'un réservoir de fluide sous pression d'un système spatial, comprenant un actionneur pyrotechnique adapté pour perforer une canalisation en communication de fluide avec ledit réservoir, **caractérisé en ce qu'**il comporte un collier adapté pour enserrer ladite canalisation, ledit collier portant :
- une cartouche pyrotechnique de perforation orientée radialement vers la canalisation et
- une enclume, diamétralement opposée à la cartouche par rapport à la canalisation.

Le dispositif de purge selon l'invention peut être ainsi adapté à tout type de réservoir pour autant que celui-ci soit muni d'une canalisation. En particulier, le dispositif peut être monté sur une canalisation de sortie d'ergols vers un moteur et/ou sur une canalisation de pressurisation reliant un réservoir de fluide de pressurisation (hélium, azote...) à une « poche de pressurisation » d'un réservoir d'ergols. De cette manière, il est possible de désactiver les réservoirs à membrane tant du côté pressurisation que du côté ergols. Le dispositif selon l'invention peut s'adapter à de nombreuses tailles de canalisations simplement en réalisant un collier adapté au diamètre de celles-ci. De plus, le dispositif de purge selon l'invention ne requiert pas d'adaptation spécifique telles que des canalisations de purge ou des dispositifs de fixation de vanne pyrotechnique car il s'installe sur des canalisations existantes et nécessaires, sans préparation spéciale de celles-ci. Il peut en outre être installé très tard dans le cycle de fabrication du satellite et devenir un composant standardisé de cette fabrication, permettant d'en réduire le coût unitaire.

Le collier enserrant la canalisation porte une cartouche pyrotechnique de perforation capable de perforer une cible, en l'occurrence la canalisation, selon un axe prédéterminé. Ces cartouches sont en général de forme cylindrique de révolution et la perforation s'effectue selon l'axe du cylindre. En plaçant une cartouche dans un logement approprié du collier et en dirigeant l'axe de la cartouche en direction radiale par rapport à l'axe de la canalisation, dans un plan orthogonal à cet axe, la perforation générée par la cartouche s'effectue diamétralement par rapport à la canalisation, au moins au travers d'une première épaisseur de paroi de celle-ci.

Avantageusement et selon une première variante de l'invention, la cartouche pyrotechnique de perforation est adaptée pour perforer deux épaisseurs de paroi de la canalisation et l'enclume est adaptée pour recueillir des débris générés par une perforation de part en part de la canalisation.

Les éventuelles projections générées par la perforation, que ce soient, le cas échéant, des débris de projectile ou bien des débris de la canalisation elle-même, sont projetées sur une enclume insérée dans le collier dans une position diamétralement opposée à la cartouche par rapport à l'axe de la canalisation. L'enclume est une pièce métallique apte à arrêter les débris et/ou les projectiles et à les retenir au moins partiellement sans créer des débris supplémentaires. A cet effet, la surface de l'enclume recevant les projections peut être lisse ou guillochée.

Ainsi, le dispositif de purge selon l'invention perfore de part en part une canalisation en communication avec le réservoir et le fluide sous pression du réservoir peut s'échapper par les trous ainsi créés jusqu'à ce que les pressions intérieure et extérieure du réservoir s'équilibrent.

Avantageusement et selon une deuxième variante de l'invention, la cartouche pyrotechnique de perforation est adaptée pour perforer au moins une première épaisseur de paroi de la canalisation et l'enclume est appliquée contre la paroi de la canalisation diamétralement opposée à la cartouche pyrotechnique afin de limiter la perforation de la seconde épaisseur de la paroi. Dans cette variante, l'enclume est pressée contre la paroi extérieure de la canalisation, à l'opposé de la cartouche pyrotechnique et renforce cette paroi pour éviter qu'elle ne soit perforée. Cette disposition permet de piéger les éventuels débris à l'intérieur de la canalisation.

Avantageusement et selon l'invention, la cartouche pyrotechnique de perforation est adaptée pour tirer un projectile perforant. Dans une première variante de réalisation, la perforation de la canalisation est réalisée par un projectile, par exemple une balle, particulièrement adaptée tant dans son énergie cinétique que dans sa constitution (diamètre, dureté...) pour perforer une ou deux épaisseurs (avant et arrière) de la paroi de la canalisation en générant le moins de débris possible.

Avantageusement et selon l'invention, la cartouche pyrotechnique de perforation est une charge adaptée pour former par explosion un projectile pénétrant, dite charge génératrice de noyau. Ces charges, connues en elles-mêmes, génèrent des projectiles à très haute énergie particulièrement bien adaptés pour percer des parois, et dont la masse est très faible, ce qui est particulièrement favorable en environnement spatial.

Avantageusement et selon l'invention, la cartouche pyrotechnique de perforation est une charge creuse apte à générer un jet énergétique perforant. Dans cette seconde variante de réalisation, ce n'est plus un projectile qui perfore la canalisation mais un jet énergétique concentré, orienté dans l'axe de la charge. La très grande capacité de perforation à courte distance de ce type de charge est avantageusement assortie d'une très faible génération de débris par la charge elle-même, les débris générés provenant essentiellement de la canalisation perforée.

Avantageusement et selon l'invention, la cartouche pyrotechnique comporte exclusivement des matériaux explosifs secondaires. Ces matériaux sont avantageusement beaucoup plus stables que les explosifs primaires et leur durée de vie est bien supérieure. En outre, ce choix simplifie la conception, particulièrement en ce qui concerne les aspects de sécurité opérationnelle en éliminant la nécessité d'installer des barrières de sécurité et d'armement.

Avantageusement et selon l'invention, la cartouche pyrotechnique de perforation est adaptée pour être déclenchée par un signal électrique ou optique. La purge du ou des réservoir(s) est commandée de manière pilotée, par exemple par une commande transmise à partir du sol. L'amorçage de la cartouche pyrotechnique est alors réalisé par une décharge électrique ou une vaporisation d'un filament métallique entre deux électrodes, ou encore par un faisceau laser transmis par une fibre optique par exemple.

Avantageusement et selon l'invention, le dispositif comprend au moins une chambre d'évacuation, s'étendant sur au moins une partie du périmètre de la canalisation autour d'un axe reliant la cartouche pyrotechnique à enclume, chaque chambre étant délimitée par deux lèvres d'appui placées respectivement de part et d'autre de la chambre selon l'axe de la canalisation et reliée au milieu extérieur par au moins un orifice d'évacuation. La chambre d'évacuation permet au fluide s'échappant de la canalisation perforée de se détendre et de s'échapper par les orifices d'évacuation vers le milieu extérieur (en l'occurrence le vide spatial). Une chambre unique peut être ménagée sur toute la périphérie de la canalisation ou bien être réalisée sous forme de deux chambres de part et d'autre de la canalisation, en regard de chaque perforation créée dans la canalisation. Le collier du dispositif selon l'invention est maintenu en position et serré sur la canalisation par deux lèvres d'appui, continues ou non, entourant la canalisation de part et d'autre de la chambre d'évacuation selon l'axe de la canalisation.

Avantageusement et selon l'invention, chaque orifice d'évacuation présente un axe parallèle à l'axe de la canalisation. En réalisant des orifices d'évacuation préférentiellement sous forme de trous cylindriques ou d'échancrures dans les lèvres d'appui, de part et d'autre de la chambre d'évacuation, le flux de fluide s'échappant du dispositif de purge est dirigé orthogonalement par rapport au flux s'échappant par les perforations de la canalisation. Ceci permet d'une part d'équilibrer les forces de réaction liées à l'échappement de gaz sous pression, et d'autre part de former une chicane visant à emprisonner dans la chambre d'évacuation tout débris qui aurait pu être généré par la perforation et/ou le projectile (le cas échéant) et non capté par l'enclume. De plus, les orifices d'évacuation peuvent être eux-mêmes formés de manière à constituer des chicanes et empêcher la dissémination de débris.

Avantageusement et selon l'invention, la chambre d'évacuation présente, en regard de la charge génératrice de noyau, une largeur adaptée pour permettre la formation du projectile pénétrant. En pratique, la transformation d'un opercule concave fermant la charge en projectile convexe adapté pour perforer une paroi nécessite un espace de course libre du projectile de quelques millimètres pour les diamètres de charges considérés. La chambre d'évacuation forme ainsi l'espace de course libre nécessaire.

L'invention concerne également un dispositif de purge caractérisé en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 est une coupe transversale, orthogonale à l'axe de la canalisation, du dispositif selon une variante préférentielle de l'invention, comportant une charge génératrice de noyau, dans son état initial ;
- la figure 2 est une coupe transversale par un plan passant par l'axe de la canalisation, du dispositif selon l'invention de la figure 1 ;
- la figure 3 est la même coupe que celle représentée à la figure 2, après le tir de la charge.

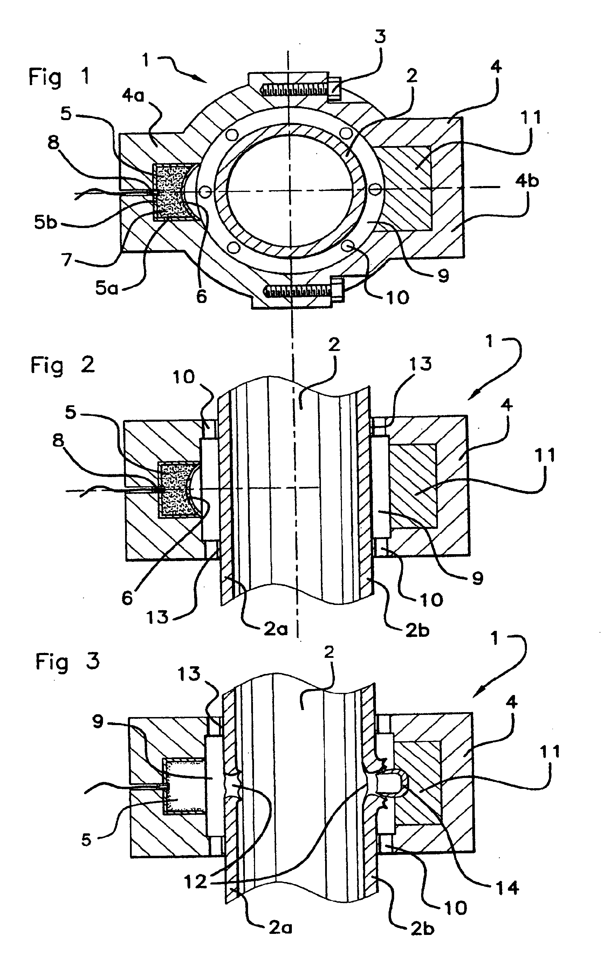

Le dispositif de purge 1 représenté en figure 1 et 2 comporte un collier 4, en général en titane ou en acier inoxydable, constitué de deux demi coquilles 4a et 4b enserrant une canalisation 2 en communication avec un réservoir (non représenté) contenant un fluide sous pression, par exemple un fluide de pressurisation tel que l'hélium ou l'azote pour mettre en pression des réservoirs d'ergols d'un satellite, ou bien contenant lesdits ergols sous pression. De préférence, le collier 4 est placé au plus près du réservoir mais, selon les cas, il peut être placé en tout point de la canalisation, à l'endroit où les contraintes d'encombrement sont les moins fortes. Les deux demi coquilles 4a et 4b sont fixées entre elles par des vis 3 de serrage du collier 4. Le collier 4 est maintenu sur la canalisation 2 par des lèvres d'appui 13 qui délimitent une chambre, dite chambre d'évacuation 9 dans la direction de l'axe de la canalisation. Les lèvres d'appui 13 sont percées par des orifices d'évacuation 10 d'axe parallèle à l'axe de la canalisation 2. Les orifices d'évacuation 10 peuvent également être formés par des échancrures des lèvres d'appui 13 . Les orifices d'évacuation 10 relient l'intérieur de la chambre d'évacuation 9 à un milieu extérieur qui est en l'occurrence le vide spatial lorsque le satellite est en orbite.

Le collier 4 porte à l'intérieur de la demi coquille 4a une cartouche pyrotechnique 5 représentée dans l'exemple illustré par une charge, dite charge génératrice de noyau, adaptée pour former un projectile pénétrant capable de perforer la canalisation 2 de part en part. La cartouche pyrotechnique 5 comporte en général une enveloppe métallique 5a, de forme cylindrique, fermée à une extrémité par une paroi 5b. La cartouche pyrotechnique 5 est placée dans le collier 4 de manière à ce que l'axe de la cartouche passe par l'axe de la canalisation 2 dans un plan orthogonal à celui-ci. La cartouche pyrotechnique 5 est remplie d'un matériau explosif 7 choisi de préférence parmi les explosifs dits secondaires tels que l'hexogène (RDX) ou l'octogène (HMX), qui se caractérisent par leur stabilité. La cartouche est fermée à l'opposé de la paroi 5b par un opercule 6 concave, dont la concavité est tournée vers la canalisation 2. La cartouche comporte également un détonateur 8 adapté pour faire détoner le matériau explosif 7 lorsqu'il reçoit une commande telle qu'un signal électrique ou optique. De manière connue, une telle cartouche pyrotechnique 5 expulse l'opercule 6 lors de la détonation du matériau explosif 7. L'opercule 6 se déforme et passe de sa forme concave à une forme convexe formant un projectile 14 se déplaçant avec une vitesse extrêmement élevée qui lui confère un pouvoir perforant considérable. On considère généralement qu'un tel projectile 14 peut perforer une épaisseur de métal allant jusqu'à une fois le diamètre de l'opercule 6 en fonction de la matière de celui-ci.

Le collier 4 porte également à l'intérieur de la demi coquille 4b une enclume 11 placée diamétralement opposée à la cartouche pyrotechnique 5 par rapport à l'axe de la canalisation 2.

Dans une première variante du dispositif selon l'invention, l'enclume 11 est placée à distance de la canalisation 2 et une chambre d'évacuation 9 est formée entre les deux.

La matière et l'épaisseur de l'enclume 11 sont adaptées pour permettre d'arrêter le projectile 14 après qu'il ait perforé les deux épaisseurs 2a et 2b de la paroi de la canalisation 2. La surface de l'enclume 11 en regard de la canalisation 2 peut également présenter un relief adapté (par exemple un guillochage) pour que le projectile 14 s'encastre dans l'enclume 11 et ne se transforme pas en débris susceptible de flotter en apesanteur. De même, il est prévu que les éventuels débris issus de la perforation de la paroi et entrainés par le projectile 14 (ou le jet énergétique généré par une charge creuse) soient projetés sur l'enclume 11 et y soient immobilisés.

Dans une deuxième variante du dispositif selon l'invention (non représentée), l'enclume 11 est plaquée contre la canalisation 2 et la chambre d'évacuation 9 n'existe pas entre l'enclume et la canalisation. L'enclume a alors pour fonction de renforcer la paroi de la canalisation opposée à la cartouche pyrotechnique 5 de manière à éviter la perforation de part en part de la canalisation. Dans cette variante, un seul côté de la canalisation est perforé, donc le débit est limité mais les débris générés par la perforation et le cas échéant par le projectile 14 sont emprisonnés à l'intérieur de la canalisation 2.

Comme on l'a représenté à la figure 3, en relation avec la première variante du dispositif, lorsqu'il est nécessaire de procéder à la purge du réservoir, une commande appropriée est transmise au détonateur 8. Cette commande peut être déclenchée par une station au sol et relayée par l'électronique de bord du satellite, sous la forme d'un signal apte à amorcer le détonateur 8. En fonction du type de détonateur, le signal peut être de nature électrique tel qu'une décharge électrique à haute tension entrainant un arc électrique entre deux électrodes ou la vaporisation d'un filament métallique générant un plasma. Le signal peut également être d'une autre nature, par exemple un signal optique véhiculant une quantité adaptée d'énergie tel qu'une impulsion laser transmise par une fibre optique.

Lorsque ce signal est reçu par le détonateur 8, le matériau explosif 7 détone et projette l'opercule 6 en direction de la canalisation 2. L'opercule se transforme alors en projectile 14 et traverse la canalisation 2 de part en part. Il provoque ainsi deux perforations 12 diamétralement opposées dans la paroi de la canalisation. Le projectile 14 vient alors s'écraser sur l'enclume 11 qui l'empêche de traverser le collier 4.

Le fluide sous pression contenu dans le réservoir s'échappe alors par les perforations 12 dans la chambre d'évacuation 9 puis par les orifices d'évacuation 10. Les éventuels débris générés lors de la perforation, que ce soient des débris provenant du projectile 14 ou des parois de la canalisation 2 restent piégés dans la chambre d'évacuation 9 grâce à la chicane formée par les orifices d'évacuation 10.

Le fonctionnement décrit ci-avant reste sensiblement le même avec une cartouche pyrotechnique 5 formée par une douille remplie de matériau explosif et une balle perforante sertie à l'extrémité de la douille en regard de la canalisation. La balle constitue alors le projectile 14 et perfore la canalisation 2 avant de s'écraser sur l'enclume 11.

L'homme du métier peut également adapter le collier 4 pour recevoir une cartouche pyrotechnique 5 sous forme d'une charge creuse. Une charge creuse est similaire dans sa constitution à une charge génératrice de noyau telle que décrite ci-avant, à l'exception de l'opercule qui est généralement de forme conique dont le sommet est dirigé vers l'intérieur de la charge et dont le bord est solidaire de l'enveloppe métallique 5b. De manière connue en soi, lors de la détonation du matériau explosif 7, l'énergie engendrée est focalisée par l'opercule qui se volatilise et génère, dans l'axe de la charge, un jet énergétique perforant. Ce jet est alors apte à perforer la canalisation 2 de manière sensiblement identique à une perforation causée par un projectile. La puissance de la cartouche pyrotechnique est adaptée pour que le jet puisse perforer la canalisation 2 et soit arrêté par l'enclume 11 de manière à rester confiné à l'intérieur du collier 4.

Bien entendu, cette description est donnée à titre d'exemple illustratif uniquement et l'homme du métier pourra y apporter de nombreuses modifications sans sortir de la portée de l'invention, comme par exemple définir différentes formes de colliers et/ou divers moyens de montage de la cartouche pyrotechnique dans le collier, par exemple avec introduction par l'extérieur dans un logement adapté dans le collier 4 et fixation par une douille à vis à l'arrière de la cartouche.

L'invention n'est en outre pas limitée à un usage dans le domaine spatial, mais peut s'étendre à tout type d'industrie dans laquelle il y a lieu de purger un volume de fluide sous pression, par exemple en aéronautique ou encore dans l'industrie chimique, etc.

## Revendications

1. Dispositif (1) de purge d'un réservoir de fluide sous pression d'un système spatial, comprenant un actionneur pyrotechnique adapté pour perforer une canalisation (2) en communication de fluide avec ledit réservoir, comportant un collier (4) adapté pour enserrer ladite canalisation, ledit collier portant une cartouche pyrotechnique (5) de perforation orientée radialement vers la canalisation (2),
**caractérisé en ce que** le collier porte également une enclume (11), diamétralement opposée à la cartouche par rapport à la canalisation.

2. Dispositif selon la revendication 1, **caractérisé en ce que** la cartouche pyrotechnique (5) de perforation est adaptée pour perforer deux épaisseurs de paroi (2a ; 2b) de la canalisation (2) et **en ce que** l'enclume (11) est adaptée pour recueillir des débris générés par une perforation de part en part de la canalisation.

3. Dispositif selon la revendication 1, **caractérisé en ce que** la cartouche pyrotechnique (5) de perforation est adaptée pour perforer au moins une première épaisseur de paroi (2a) de la canalisation (2) et **en ce que** l'enclume (11) est appliquée contre la paroi de la canalisation diamétralement opposée à la cartouche pyrotechnique afin de limiter la perforation de la seconde épaisseur (2b) de la paroi.

4. Dispositif selon l'une quelconque des revendications 1 à 3, **caractérisé en ce que** la cartouche pyrotechnique (5) de perforation est adaptée pour tirer un projectile (14) perforant.

5. Dispositif selon la revendication 4, **caractérisé en ce que** la cartouche pyrotechnique (5) de perforation est une charge adaptée pour former par explosion un projectile (14) pénétrant, dite charge génératrice de noyau.

6. Dispositif selon l'une quelconque des revendications 1 à 3, **caractérisé en ce que** la cartouche pyrotechnique (5) de perforation est une charge creuse apte à générer un jet énergétique perforant.

7. Dispositif selon l'une quelconque des revendications 1 à 6, **caractérisé en ce que** la cartouche pyrotechnique (5) comporte exclusivement des matériaux explosifs (7) secondaires.

8. Dispositif selon l'une quelconque des revendications 1 à 7, **caractérisé en ce que** la cartouche pyrotechnique de perforation est adaptée pour être déclenchée par un signal électrique ou optique.

9. Dispositif selon l'une quelconque des revendications 1 à 8, **caractérisé en ce qu'**il comprend au moins une chambre d'évacuation (9), s'étendant sur au moins une partie du périmètre de la canalisation (2), autour d'un axe reliant la cartouche pyrotechnique (5) à l'enclume (11) chaque chambre étant délimitée par deux lèvres d'appui (13) placées respectivement de part et d'autre de la chambre selon l'axe de la canalisation et reliée au milieu extérieur par au moins un orifice (10) d'évacuation.

10. Dispositif selon la revendication 9, **caractérisé en ce que** chaque orifice (10) d'évacuation présente un axe parallèle à l'axe de la canalisation (2).

11. Dispositif selon l'une quelconque des revendications 9 ou 10, prises en combinaison avec la revendication 5, **caractérisé en ce que** la chambre d'évacuation (9) présente, en regard de la charge génératrice de noyau, une largeur adaptée pour permettre la formation du projectile (14) pénétrant.

## Patentansprüche

1. Vorrichtung (1) zur Entleerung eines Fluidtanks unter Druck eines Raumfahrtsystems, umfassend einen pyrotechnischen Aktuator, der ausgelegt ist, um einen Leitung (2) in fluidischer Kommunikation mit dem Tank zu perforieren, umfassend eine Hülse (4), die ausgelegt ist, um die Leitung einzuspannen, wobei die Hülse eine pyrotechnische Patrone (5) zur Perforation trägt, die radial hin zur Leitung (2) ausgerichtet ist,
**dadurch gekennzeichnet, dass** die Hülse auch einen Amboss (11) trägt, der der Patrone mit Bezug auf die Leitung diametral entgegen gesetzt ist.

2. Vorrichtung nach Anspruch 1, **dadurch gekennzeichnet, dass** die pyrotechnische Patrone (5) zur Perforation ausgelegt ist, um zwei Wanddicken (2a; 2b) der Leitung (2) zu perforieren, und dadurch, dass der Amboss (11) ausgelegt ist, um Bruchstücke zu sammeln, die von einer Perforation durch die Leitung erzeugt werden.

3. Vorrichtung nach Anspruch 1, **dadurch gekennzeichnet, dass** die pyrotechnische Patrone (5) zur Perforation ausgelegt ist, um mindestens eine erste Wanddicke (2a) der Leitung (2) zu perforieren, und dadurch, dass der Amboss (11) gegen die Wand der Leitung angebracht ist, die der pyrotechnischen Patrone diametral entgegen gesetzt ist, um die Perforation der zweiten Wanddicke (2b) zu begrenzen.

4. Vorrichtung nach einem der Ansprüche 1 bis 3, **dadurch gekennzeichnet, dass** die pyrotechnische Patrone (5) zur Perforation ausgelegt ist, um ein perforierendes Geschoss (14) abzuschießen.

5. Vorrichtung nach Anspruch 4, **dadurch gekennzeichnet, dass** die pyrotechnische Patrone (5) zur Perforation eine Ladung ist, die ausgelegt ist, um durch Explosion ein eindringendes Geschoss (14) zu bilden, genannt Hohlladung.

6. Vorrichtung nach einem der Ansprüche 1 bis 3, **dadurch gekennzeichnet, dass** die pyrotechnische Patrone (5) zur Perforation eine hohle Ladung ist, die ausgelegt ist, um einen perforierenden Energiestrahl zu erzeugen.

7. Vorrichtung nach einem der Ansprüche 1 bis 6, **dadurch gekennzeichnet, dass** die pyrotechnische Patrone (5) ausschließlich sekundäre explosive Materialien (7) umfasst.

8. Vorrichtung nach einem der Ansprüche 1 bis 7, **dadurch gekennzeichnet, dass** die pyrotechnische Patrone zur Perforation ausgelegt ist, um durch ein elektrisches oder optisches Signal ausgelöst zu werden.

9. Vorrichtung nach einem der Ansprüche 1 bis 8, **dadurch gekennzeichnet, dass** sie mindestens eine Ablaufkammer (9) umfasst, die sich auf mindestens einem Teil des Umfangs der Leitung (2) erstreckt, um eine Achse, die die pyrotechnische Patrone (5) mit dem Amboss (11) verbindet, wobei jede Kammer von zwei Stützlippen (13) begrenzt ist, die jeweils auf beiden Seiten der Kammer gemäß der Achse der Leitung angebracht und mit der äußeren Umgebung durch mindestens eine Ablauföffnung (10) verbunden ist.

10. Vorrichtung nach Anspruch 9, **dadurch gekennzeichnet, dass** jede Ablauföffnung (10) eine Achse aufweist, die parallel zur Achse der Leitung (2) ist.

11. Vorrichtung nach einem der Ansprüche 9 oder 10, in Kombination mit Anspruch 5, **dadurch gekennzeichnet, dass** die Ablaufkammer (9), gegenüber der Hohlladung, eine Breite aufweist, die ausgelegt ist, um die Bildung des eindringenden Geschosses (14) zu ermöglichen.

## Claims

1. Device (1) for draining a tank of fluid under pressure pertaining to a space system, including a pyrotechnic actuator that is suitable to perforate a conduit (2) in fluid communication with said tank, said device including a collar (4) that is suitable to enclose said conduit, said collar bearing a pyrotechnic cartridge (5) for perforation, oriented radially towards the conduit (2), **characterized in that** said collar comprises also an anvil (11) diametrically opposed to the cartridge in relation to the conduit.

2. Device according to Claim 1, **characterized in that** the pyrotechnic cartridge (5) for perforation is suitable to perforate two wall thicknesses (2a; 2b) of the conduit (2) and **in that** the anvil (11) is suitable to collect debris generated by a perforation right through the conduit.

3. Device according to Claim 1, **characterized in that** the pyrotechnic cartridge (5) for perforation is suitable to perforate at least a first wall thickness (2a) of the conduit (2) and **in that** the anvil (11) is applied against the wall of the conduit diametrically opposed to the pyrotechnic cartridge, in order to limit the perforation of the second thickness (2b) of the wall.

4. Device according to any one of Claims 1 to 3, **characterized in that** the pyrotechnic cartridge (5) for perforation is suitable to fire a perforating projectile (14).

5. Device according to Claim 4, **characterized in that** the pyrotechnic cartridge (5) for perforation is a charge that is suitable to form a penetrating projectile (14), called explosively formed penetrator (EFP), by explosion.

6. Device according to any one of Claims 1 to 3, **characterized in that** the pyrotechnic cartridge (5) for perforation is a shaped charge that is capable of generating a perforating jet of energy.

7. Device according to any one of Claims 1 to 6, **characterized in that** the pyrotechnic cartridge (5) includes exclusively secondary explosive materials (7).

8. Device according to any one of Claims 1 to 7, **characterized in that** the pyrotechnic cartridge for perforation is suitable to be triggered by an electrical or optical signal.

9. Device according to any one of Claims 1 to 8, **characterized in that** it includes at least one evacuation chamber (9) extending over at least a part of the perimeter of the conduit (2) around an axis linking the pyrotechnic cartridge (5) to the anvil (11), each chamber being delimited by two support lips (13), placed respectively on either side of the chamber along the axis of the conduit, and linked to the external environment by at least one exhaust port (10).

10. Device according to Claim 9, **characterized in that** each exhaust port (10) exhibits an axis parallel to the axis of the conduit (2).

11. Device according to either one of Claims 9 or 10, taken in combination with Claim 5, **characterized in that** the evacuation chamber (9) exhibits, opposite the explosively formed penetrator (EFP), a width that is suitable to enable the formation of the penetrating projectile (14).
